# EUROPÄISCHE PATENTANMELDUNG

(11) **EP 0 822 688 A1**
(43) Veröffentlichungstag der Anmeldung: **04.02.1998**
(21) Anmeldenummer: 96110850.3
(22) Anmeldetag: 04.07.1996
(51) Int. Cl.: H04L 25/02

(54) **Busankoppler mit amplitudengesteuerter Sendeschaltung**

(71) Anmelder: SIEMENS AKTIENGESELLSCHAFT, 80333 München (DE)
(72) Erfinder: Zierhut, Hermann, 93073 Neutraubling (DE)

(57) **Zusammenfassung**

Die Erfindung bezieht sich auf einen Busankoppler mit amplitudengesteuerter Sendeschaltung zur Erzeugung eines im wesentlichen rechteckförmigen Aktivimpulses bei einem Sendeimpuls aus Aktivimpuls und Ausgleichsimpuls, für ein Bussystem, das Wechselspannungsinformation und Gleichspannung zum Bereitstellen von Bordnetzspannung von Teilnehmerstationen führt, insbesondere für den Bus der European Installation Bus Association. Es ist vorgesehen, daß die Sendeschaltung mit einer Sendestufe arbeitet, die ein Sendeventil mit der Funktion eines Transistors in Emitterschaltung als Sendetransistor (1) aufweist, und deren Ansteuerleitung der Funktion nach durch einen Transistor vom inversem Typ zum Sendetranststor in Kollektorschaltung als Reduzierungstransistor (3) im Ansteuersignal reduziert ist, wobei ein Kondensator (4) als Weiche für Wechselspannung einerseits mit einem Anschluß für einen Busleiter (5) verbunden ist und andererseits mit einem Spannungsteiler (6) in Verbindung steht, der auch mit einer Referenzspannung verbunden ist, wobei ein Abgriff (7) des Spannungsteilers (6) mit der Basis des Reduzierungstransistors (3) verbunden ist.

## Beschreibung

Die Erfindung bezieht sich auf einen Busankoppler mit amplitudengesteuerter Sendeschaltung zur Erzeugung eines im wesentlichen rechteckförmigen Aktivimpulses bei einem Sendeimpuls aus Aktivimpuls und Ausgleichsimpuls. Das Bussystem führt Wechselspannungsinformationen und Gleichspannung zum Bereitstellen von Bordnetzspannung von Teilnehmerstationen. Mit einem derartigen Bussystem der Gebäudesystemtechnik arbeitet beispielsweise die European Installation Bus Association, EIBA.

Im einzelnen bezieht sich die Erfindung auf einen Busankoppler nach Gattungsbegriff von Anspruch 1.

Derartige Busankoppler der Gebäudesystemtechnik, bei der der Bus Wechselspannungsinformationen und überlagerte Gleichspannung zur Versorgung der Bordnetze der Teilnehmerstationen führt, arbeiten üblicherweise mit einem Übertrager, der in seinem Volumen nicht nennenswert verringert werden kann.

Der Erfindung liegt die Aufgabe zugrunde, einen Busankoppler zu entwickeln, der auf wirtschaftliche Weise ohne Übertrager auskommt und der insgesamt in einem verringerten Volumen untergebracht werden kann.

Die Lösung der geschilderten Aufgabe erfolgt durch einen Busankoppler nach Anspruch 1. Die Sendeschaltung arbeitet mit einer Sendestufe, die ein Sendeventil mit der Funktion eines Transistors in Emitterschaltung als Sendetransistor aufweist. Die Ansteuerleitung der Sendeschaltung ist der Funktion nach durch einen Transistor vom inversen Typ zum Sendetransistor in Kollektorschaltung, als Reduzierungstransistor bezeichnet, im Ansteuersignal reduziert. Ein Kondensator dient als Weiche für Wechselspannung und ist einerseits mit einem Anschluß für einen Busleiter verbunden und steht andererseits mit einem Spannungsteiler in Verbindung, der auch mit einer Referenzspannung verbunden ist. Ein Abgriff des Spannungsteilers ist mit der Basis des Reduzierungstransistors verbunden. Ein derartiger Busankoppler läßt sich wegen seines geringen Volumens in einem dickeren Schalterdosendeckel eines üblichen Installationsschalters unterbringen.

Als Referenzspannung für den Spannungsteiler kann die Bordnetzspannung verwendet werden.

Ein komfortablerer Busankoppler mit weiteren vorteilhaften Eigenschaften wird durch einen Busankoppler nach Anspruch 3 erzielt. Hierbei arbeitet auf den Sendetransistor der Funktion nach ein Treibertransistor, der durch den Reduzierungstransistor in seinen Amplituden begrenzt ist, wobei in Reihe zum Emitter des Reduzierungstransistors der Funktion nach eine Diode eingeschaltet ist. Hierbei ist die Sendeamplitude unabhängig von der Toleranz der Ansteuerspannung am Eingang für das Sendesignal. Die als Regelverstärker wirkende Sendeschaltung ist in ihrer Regelschwelle vorteilhaft auf Masse bezogen. Eine gute Begrenzung wird dadurch erreicht, daß das Regelkriterium durch einen Vergleich der Ausgangsamplitude der Referenzspannung über den Spannungsteiler gewonnen wird.

Zur Begrenzung von Kurzschlußströmen ist es günstig, wenn der Sendetransistor in seiner Kollektorleitung einen Widerstand zur Begrenzung von Kurzschlußströmen aufweist.

An der Verbindungsleitung zwischen dem Kondensator als Weiche für Wechselspannung und dem Spannungsteiler läßt sich günstig eine Empfängerschaltung anschließen. Die Empfängerschaltung kann vorteilhaft einen pnp-Transistor in Emitterschaltung und einen Kollektorwiderstand aufweisen, im einzelnen nach Anspruch 6. Der Emitter des pnp-Transistors ist mit der Bordnetzspannung verbunden und sein Kollektorwiderstand an Masse angeschlossen. Zwischen der Verbindung von Kondensator als Weiche für Wechselspannung und vom Spannungsteiler einerseits mit der Empfängerschaltung andererseits kann vorteilhaft ein Filter für Störungen vom Bus her nach Anspruch 7 eingeschaltet sein. Dieses Filter kann nach einer einfachen und günstigen Ausführung durch einen Widerstand und eine Kapazität gebildet sein.

Die Erfindung soll nun anhand von in der Zeichnung auf schematisch wiedergegebenen Ausführungsbeispielen näher erläutert werden.

In FIG 1 ist die Sendeschaltung nach einer besonders einfachen Basisausführung veranschaulicht.

In FIG 2 ist ein erweitertes Ausführungsbeispiel für die Sendeschaltung des Busankopplers dargestellt. Es werden hierbei weitere Vorteile erzielt.

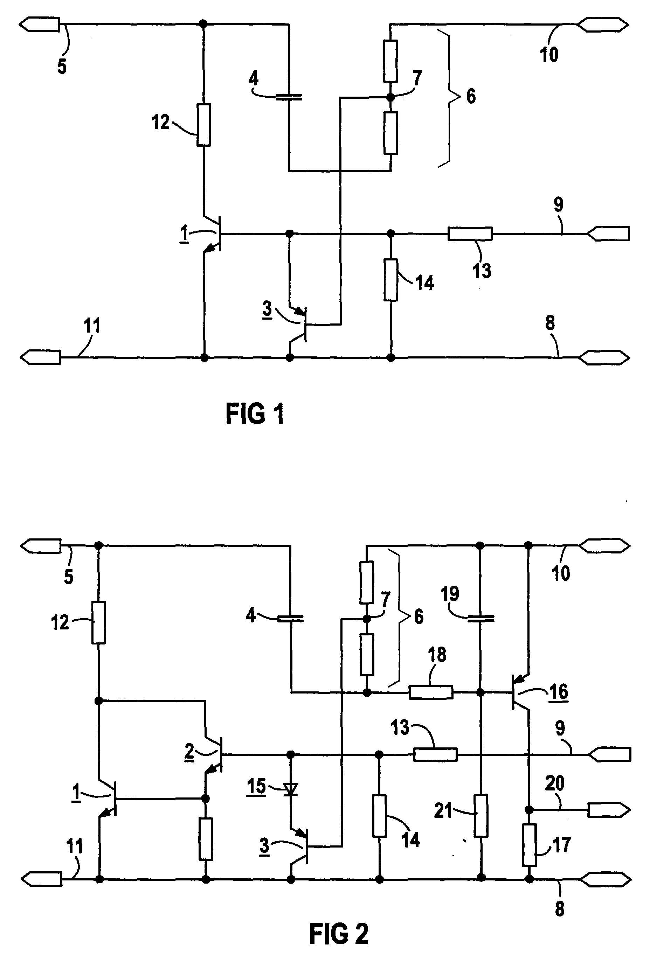

Die Sendeschaltung nach FIG 1 arbeitet in der Sendestufe mit einem Sendeventil 1 mit der Funktion eines Transistors in Emitterschaltung, als Sendetransistor bezeichnet. In der Ansteuerleitung der Sendeschaltung ist der Funktion nach durch einen Transistor von inversem Typ hinsichtlich des Sendetransistors in Kollektorschaltung, Reduzierungstransistor 3 genannt, das Ansteuersignal reduziert. Ein Kondensator 4 dient als Weiche für Wechselspannung und ist einerseits mit einem Anschluß für einen Busleiter 5 verbunden und andererseits mit einem Spannungsteiler 6. Der Spannungsteiler 6 ist auch mit einer Referenzspannung verbunden. Ein Abgriff 7 am Spannungsteiler ist mit der Basis des Reduzierungstransistors 3 verbunden. Wenn die Regelschwelle des als Regelverstärkers wirkenden Reduzierungstransistors 3 auf Masse 8 bezogen ist, ist die Sendeamplitude unabhängig von der Ansteuerspannung am Eingang 9 für das Sendesignal, da das Regelkriterium aus einem Vergleich der Ausgangsamplitude des Sendesignals mit der Referenzspannung über den Spannungsteiler 6 erfolgt. Das Referenzsignal steht an der Leitung 10 an. Ein Anschluß für einen zweiten Busleiter ist mit 11 bezeichnet.

Durch den Spannungsteiler 6 kann die Schaltschwelle beispielsweise auf die halbe Referenzspannung eingestellt werden, wobei der Innenwiderstand eines ansteuernden Prozessors dann keinen Einfluß mehr hat. Um ein gleichartiges Ergebnis mit üblicher Regelungstechnik zu erreichen, würde man zumindest einen Operationsverstärker benötigen und damit Volumen und wirtschaftlichen Aufwand deutlich erhöhen.

Ein Widerstand 12 in der Kollektorleitung des Sendetransistors 1 begrenzt vorteilhaft Kurzschlußströme. Als Referenzspannung kann an der Leitung 10 die Bordnetzspannung angelegt werden. Die Widerstände 13 und 14 bilden gleichfalls einen Spannungsteiler, durch den die Schaltschwelle für den Sendetransistor 1 auf die halbe Referenzspannung eingestellt werden kann. Der Innenwiderstand eines ansteuernden Prozessors hat dann keinen Einfluß mehr. Um ein gleichartiges Ergebnis mit der üblichen Regelungstechnik zu erreichen, würde zumindest ein Operationsverstärker benötigt, der Volumen und wirtschaftlichen Aufwand erheblich erhöhte.

Die Schaltung nach FIG 1 ist vorteilhaft, wenn der Sendestrom am Eingang 9 für das Sendesignal ausreichend groß ist, um den Sendetransistor 1 anzusteuern.

Bei schwächeren Sendesignalen, wenn sie zum direkten Ansteuern des Sendetransistors 1 nicht ausreichen, ist eine Schaltung nach FIG 2 vorteilhaft. Hier arbeitet auf den Sendetransistor 1 der Funktion nach ein Transistor, hier Treibertransistor 2 genannt, der durch den Reduzierungstransistor 3 in seinen Amplituden begrenzt ist. In Reihe zum Emitter des Reduzierungstransistors 3 ist eine Diode 15 eingeschaltet. An der Verbindungsleitung zwischen dem Kondensator 4, der als Weiche für Wechselspannung und Gleichspannung für das Bordnetz dient, und zwischen dem Spannungsteiler 6 ist zusätzlich eine Empfängerschaltung angeschlossen, die sich bei einem Busankoppler nach FIG 2 mit wenigen Bauteilen realisieren läßt: Sie weist einen pnp-Transistor als Empfangstransistor 16, in Emitterschaltung auf, wobei der Kollektor über einen Kollektorwiderstand 17 an Masse 8 angeschlossen ist. Zwischen der Verbindung von Kondensator 4, der als Weiche dient, und vom Spannungsteiler 6 einerseits und der Empfängerschaltung mit dem Empfangstransistor 16 andererseits ist ein Filter aus Widerstand 18 und Kapazität 19 eingeschaltet, durch das Störungen vom Bus herausgefiltert werden. Die Empfangsschaltung weist den Ausgang 20 auf.

Die Schaltung funktioniert wie folgt:

Der Sendetransistor 1 bildet mit seiner Anschaltung die Sendestufe und der Treibertransistor 2 mit seiner Anschaltung die Treiberstufe. Der Reduzierungstransistor 3 bildet zusammen mit der Diode 15, einer Emitterdiode, eine Regelstufe. Der Sendetransistor 1 und Treibertransistor 2 könnten in einem FET zusammengefaßt werden. Nach derzeitigem Stand ist es jedoch wirtschaftlicher, zwei Halbleiterbereiche mit Bipolar-Transistoren oder zwei gesonderte Bipolar-Transistoren zu verwenden. Man könnte auch die Transistoren in einer Darlington-Schaltung zusammenfassen, um Bauteile einzusparen.

Der Widerstand 18 und der Kondensator 19 bilden ein Tiefpaßfilter. Zusammen mit dem Empfängertransistor 16 und dem Kollektorwiderstand 17 bilden diese Bauteile im wesentlichen die Empfangsschaltung. Nimmt beispielsweise die Spannung an der Basis des Empfangstransistors 16 um etwa 0,7V ab, schaltet der Transistor durch und von seinem Kollektor wird dem Ausgang 20 ein HIGH-Signal zugeführt.

Wenn beim Sendevorgang am Eingang 9 ein HIGH-Signal angelegt wird, steuert der Treibertransistor 2 den Sendetransistor 1 an. Der Begrenzungswiderstand 12 grenzt dabei den Strom beispielsweise auf einen Wert unterhalb von 0,3 Ampere. Die am Anschluß 5 für einen Busleiter anstehende Busspannung wird dabei in Richtung der am Anschluß 11 für den zweiten Busleiter anstehenden Spannung bzw. auf Masse 8 gezogen. Da sich vor dem Sendeimpuls der Kondensator 4 auf eine Spannung entsprechend der Busspannung am Anschluß 5 minus der Referenzspannung an der Leitung 10 aufgeladen hat, erscheint die volle Sendeamplitude am Verbindungspunkt von Kondensator 4 und unterem Widerstand des Spannungsteilers 6 auf eine Spannung in Höhe der Referenzspannung, an der Leitung 10, überhöht. Beispielsweise kann die Referenzspannung auf 5V eingestellt sein. Über den Spannungsteiler 6 wird diese überhöhte Spannung auf die an der Basis des Reduzierungstransistors 3 gewünschte Spannung von beispielsweise 5 oder 7V reduziert. Wird die vorgegebene maximale Amplitude überschritten, wird der Treibertransistor 2 durch den Reduzierungstransistor 3 zugesteuert, so daß der vorgegebene Spannungswert der Sendeamplitude beibehalten wird.

Die Diode 15 erfüllt dabei zwei wesentliche Aufgaben:

Einmal dient sie zum Ansteuern der Sendestufe bzw. des Sendetransistors 1 über die Treiberstufe bzw. über den Treibertransistor 2, wobei zwei Basis-Emitter-Spannungen wirksam werden, die an sich einen starken Temperaturkoeffizienten aufweisen. Dieser Temperaturkoeffizient wird jedoch eliminiert, da die Ansteuerung des Reduzierungstransistors 3 über die Diode 15 gleichfalls zwei Basis-Emitter-Spannungen wirksam werden laßt. Die zweite Funktion ist das Eliminieren eines Regelfehlers. Zur Veranschaulichung sei angenommen, daß man die Regelgröße auf 5V über Masse bezogen habe. Der Regeleingriffspunkt liegt an der Basis des Treibertransistors 2 also zwei Basis-Emitter-Spannungen, nämlich der des Sendetransistors 1 und der des Treibertransistors 2, bei zwei Basis-Emitter-Spannungen oberhalb Masse. Durch die Diode 15 in Serie zur Basis-Emitter-Strecke des Reduzierungstransistors 3 liegt der Regelbezugspunkt ebenfalls zwei Basis-Emitter-Spannungen oberhalb Masse. Die gedanklichen zwei Schwellen aus Basis-Emitter-Spannungen sind dadurch kompensiert, so daß kein Regelfehler mehr wirksam werden kann.

Wenn man zwischen der Basis des Transistors 16 und der Masse 8 einen hochohmigen Widerstand 21 zum Einstellen des Arbeitspunktes einschaltet, kann man die Eingangsschaltschwelle des Empfängers reduzieren. Beispielsweise kann man durch den Widerstand 21 in Verbindung mit dem Spannungsteiler 6 und dem Filterwiderstand 18 einen solchen Strom einstellen, daß an der Basis des Empfangstransistor 16 eine Vorspannung von minus 0,4 V entsteht, so daß die Schaltschwelle des Empfängers von 0,7 V auf 0,3 V reduziert wird. Der Empfänger wird dadurch empfindlicher eingestellt.

## Patentansprüche

1. Busankoppler mit amplitudengesteuerter Sendeschaltung zur Erzeugung eines im wesentlichen rechteckförmigen Aktivimpulses bei einem Sendeimpuls aus Aktivimpuls und Ausgleichsimpuls, für ein Bussystem, das Wechselspannungsinformation und Gleichspannung zum Bereitstellen von Bordnetzspannung von Teilnehmerstationen führt, insbesondere für den Bus der European Installation Bus Association, EIBA,
**dadurch gekennzeichnet**,
daß die Sendeschaltung mit einer Sendestufe arbeitet, die ein Sendeventil mit der Funktion eines Transistors in Emitterschaltung als Sendetransistor (1) aufweist, und deren Ansteuerleitung der Funktion nach durch einen Transistor vom inversen Typ zum Sendetransistor in Kollektorschaltung als Reduzierungstransistor (3) im Ansteuersignal reduziert ist, wobei ein Kondensator (4) als Weiche für Wechselspannung einerseits mit einem Anschluß für einen Busleiter (5) verbunden ist und andererseits mit einem Spannungsteiler (6) in Verbindung steht, der auch mit einer Referenzspannung verbunden ist, wobei ein Abgriff (7) des Spannungsteilers (6) mit der Basis des Reduzierungstransistors (3) verbunden ist.

2. Busankoppler nach Anspruch 1,
**dadurch gekennzeichnet**,
daß als Referenzspannung die Bordnetzspannung dient.

3. Busankoppler nach Anspruch 1 oder 2,
**dadurch gekennzeichnet**,
daß auf den Sendetransistor (1) der Funktion nach ein Treibertransistor (2) arbeitet, der durch den Reduzierungstransistor (3) in seinen Amplituden begrenzt ist, wobei in Reihe zum Emitter des Reduzierungstransistors (3) der Funktion nach eine Diode (15) eingeschaltet ist.

4. Busankoppler nach einem der Ansprüche 1 bis 3,
**dadurch gekennzeichnet**,
daß der Sendetransistor (1) in seiner Kollektorleitung einen Widerstand (12) zur Begrenzung von Kurzschlußströmen aufweist.

5. Busankoppler nach einem der Ansprüche 1 bis 4,
**dadurch gekennzeichnet**,
daß an der Verbindungsleitung zwischen dem Kondensator (4) als Weiche für Wechselspannung und dem Spannungsteiler (6) eine Empfängerschaltung angeschlossen ist.

6. Busankoppler nach Anspruch 5,
**dadurch gekennzeichnet**,
daß die Empfängerschaltung der Funktion nach einen pnp-Transistor als Empfangstransistor 16 mit einem Kollektorwiderstand 17 aufweist, wobei der Emitter des Empfangstransistors (16) mit der Bordnetzspannung verbunden ist und sein Kollektorwiderstand (17) an Masse (8) angeschlossen ist.

7. Busankoppler nach Anspruch 5 oder 6,
**dadurch gekennzeichnet**,
daß zwischen der Verbindung von Kondensator (4) als Weiche für Wechselspannung und vom Spannungsteiler (6) einerseits mit der Empfängerschaltung andererseits ein Filter eingeschaltet ist.

8. Busankoppler nach Anspruch 7,
**dadurch gekennzeichnet**,
daß das Filter durch einen Widerstand (18) und eine Kapazität (19) gebildet ist.

9. Busankoppler nach einem der Ansprüche 5 bis 8,
**dadurch gekennzeichnet**,
daß zwischen der Basis des Empfangstransistors (16) und der Masse (8) ein hochohmiger Widerstand (21) zum Einstellen des Arbeitspunktes vorgesehen ist.
